# EUROPEAN PATENT SPECIFICATION

(11) **EP 4 026 040 B1**
(45) Date of publication and mention of the grant of the patent: **10.09.2025**
(21) Application number: 21774673.4
(22) Date of filing: 26.02.2021
(51) Int. Cl.: G06G 1/00, G09B 19/02, G09B 1/22, A63F 3/04, A63F 5/04, A63F 7/04, A63F 9/00, A63F 9/08, G06G 1/08

(54) **INSTRUCTIONAL MATERIAL: MULTIPLICATION AND DIVISION TEACHING TOY PENHOLDER**
INSTRUKTIONSMATERIAL: SPIELZEUGSTIFTHALTER ZUM LEHREN VON MULTIPLIKATION UND DIVISION
MATÉRIEL DIDACTIQUE : PORTE-PLUME POUR JOUET D'APPRENTISSAGE DE LA MULTIPLICATION ET DE LA DIVISION

(30) Priority: 27.03.2020 TR 202004891
(43) Date of publication of application: 13.07.2022
(73) Proprietor: SAHINKAYASI, HAMIDE, Keçiören/ Ankara 06290 (TR); SAHINKAYASI, YUNIS, Keçiören/ Ankara 06290 (TR)
(72) Inventor: SAHINKAYASI, Yunis, Antakya/Hatay (TR); SAHINKAYASI, Hamide, Antakya/Hatay (TR)
(74) Representative: Tasçi, Abdurrahman
(86) International application number: PCT/TR2021/050176
(87) International publication number: WO 2021/194448

(56) References cited:
- CA-A- 1 264 938
- CA-A- 1 264 938
- DE-U1- 29 505 211
- JP-A- H1 049 039
- JP-A- H1 049 039
- US-A- 4 714 429

## Description

### Technological Area:

This invention relates to a concrete instructional material that helps primary school pupils learn forward-backward rhythmic counting, multiplication-division tables, and the relationship between inverse equations of multiplication-division. It also allows them to play a game on these subjects individually or in groups.

### The State of the Art:

Since mathematics is a discipline consisting of abstract and symbolic concepts, teachers and pupils, especially in primary school, have difficulties teaching and learning it. Primary school pupils have various problems in mathematics courses' conceptual and operational learning processes due to their inability to think abstractly. One of the most critical problems is that they cannot thoroughly learn forward-backward rhythmic counting and multiplication-division tables and cannot perform related operations. These are prerequisite topics for mathematics. This problem can cause them to develop a negative attitude and even fail throughout their mathematics education. Therefore, pupils must learn forward-backward rhythmic counting, prerequisite knowledge, and skills of multiplication-division operations. Furthermore, they need to perform conceptual and operational learning on multiplication division.

However, all pupils can't achieve these learnings by doing limited practice on forward-backward rhythmic counting and multiplication/division during only mathematics class hours. To overcome this difficulty, teachers assign homework and try to motivate them to learn multiplication-division tables. Yet, these require teachers to check each pupil's work and give feedback and corrections. Considering the number of pupils per teacher and the effort and time spent on each, it is impossible to do this. Furthermore, this approach to teaching is not efficient and productive for teachers. In this case, they gravitate to peer assessment or parental support to save time and effort. However, this approach has inherent problems, such as honesty and trust. As a result, the relevant literature suggests integrating instructional materials in the teaching-learning process to help and support pupils, teachers, and parents in teaching primary school mathematics topics.

In this regard, there is a need for concrete instructional material that allows pupils to study, learn, and reinforce both forward-backward rhythmic counting and multiplication-division conceptually and operationally. To meet this need, the product proposed in this specification allows pupils to perform unlimited forward-backward rhythmic counting simultaneously, do multiplication-division practices, and play games on the subject individually or in groups without time and place limitations. Furthermore, this product helps them recognize and comprehend the relationships between multiplication-division equations that are inverse operations to one another and memorize the multiplication-division tables.

As a result of the searches done on patent databases, no application with all properties of the product proposed in this application was encountered among the existing applications. An examination of the fundamental properties of applications revealed that products related to the topic of this application are generally two or three-dimensional (2D or 3D), square (2007/06226, 2017/07231, 2007/06226, etc.), rectangular (CN2831302Y, 2012/06173, 2017/06759, GB2480256A, etc.), circular (GB667706A, CN2189338Y, CN2241367Y, etc.) or cylindrical (CA1264938A, CN86210344U, EP0373906A1 US4714429A, CN86210344U, CN2061900U, JPS5331421A, JPH1049039A, US4714429A, GB2227862B, GB1390155A, etc.) shaped. Especially square and rectangular products generally designed in 2D, big sizes, based on block-based displaying approaches, indicating multiples of a number simultaneously, many of which include only multiplication. As to the circular and cylindrical ones, they have generally overlapped and nested designs in the shape of 3D and are relatively smaller. In most products, there is only a block-based notation of multiplication equations based on matrices.

The product in application number US4714429A consists of two nested cylinders and simultaneously displays the multiplication of some unrelated numbers. The product does not have any technical features regarding division. The product in the application numbered JPH1049039A consists of three nested cylinders, and the application is based on multiplication. Although it is stated in its application that another symmetrical product could be designed for division and is shown in its drawings, the product contains rhythmic counting and multiplication operations but not division operations. The product displays only one multiplication equation at a time with illustrated rhythmic counting for each use. In these applications, nested cylinders are used, and the numbers in multiplication equations are displayed through holes or a band-like window.

The product in application number CA1264938A consists of two nested cylinders, and the product displays backward-forward rhythmic counting and multiplication of numbers 1-12 in blocks without the "=" sign. The product does not have any technical features regarding division. The product in application number DE 29505211 U1 is not related to rhythmic counting, multiplication, or division. It is related to vocabulary teaching, and words are written by individually rotating the hoops with alphabet letters on them and juxtaposing the letters side by side. In these applications, nested cylinders should be used to make multiplication operations appear, and hoops within the cylinder should be rotated to form words. Multiplication operations are displayed through the holes in the outer cylinder, and the words created are displayed through the band-like window. The products in these applications are like the product in this application in that they have a cylindrical structure, display rhythmic counting and multiplication operations, and in-cylinder hoops used in the word formation approach.

### Description of the Invention:

The products in these two applications (US4714429A and JPH1049039A) mentioned in the prior art and the product in this application are similar in that they have a cylindrical structure and focus on rhythmic counting and multiplication. However, the product in this application differs from the other two in the following technical features: (1) ability to perform backward-forward rhythmic counting in blocks on a column basis and modularly on a row basis, (2) ability to write multiplication and division equations modularly on a row basis simultaneously by universal mathematical writing, (3) ability to display the commutative property of multiplication, multiplicative identity, and the squares of numbers 1-10 modularly on a row basis, (4) ability to write the factors, quotients, and divisors in inverse equations simultaneously and display the relationships between the components in these equations and (5) having a toy enabling to use 42 game numbers consisting of equal products and dividends in multiplication-division tables and the frequency with which they occur in equations.

The product in this application differs from the products in these applications (CA1264938A and DE 29505211 U1) as well as the products in the other two applications (US4714429A and JPH1049039A) mentioned in the prior art due to the five technical features above. Although the product in the application numbered DE 29505211 U1 and the product in this application are similar in terms of technical structure (rotation of the hoops in a cylinder), all hoops have the same content (letters of the alphabet) and no hoop can give a meaningful output independently of the other hoops in the product in DE 29505211 U1. That product cannot give feedback to the student regarding the accuracy or meaning of the words created by using the hoops together. However, since each of the product hoops in this application has a different content, each hoop can perform backward-forward rhythmic counting and write multiplication-division equations independently of the others.

The three technical features that make the product in this application technically superior to the products in other applications and the abilities they provide are as follows:
1. No product displays inverse multiplication-division equations simultaneously, which is a new technical feature.
   a. Ability to write multiplication-division equations, which are inverses of each other, modularly on a row basis, simultaneously, by universal mathematical writing.
   b. Learning and reinforcing the relationships between components in multiplication and division equations.
2. Breaking down matrices on a row basis and writing them modular equations on a row basis is not available in previous products.
   a. Ability to perform modular forward-backward rhythmic counting on a row basis.
   b. Ability to display factors of products between 1-10.
   c. Ability to display divisors of dividends between 1-10.
   d. Ability to display the property of multiplicative identity.
   e. Ability to display the commutative property of multiplication.
   f. Ability to display squares of numbers 1-10.
3. Having a toy allows you to use 42 game numbers of equal products and dividends in multiplication-division tables and the frequency of their occurrence in equations.
   a. Motivated to write more equations.
   b. Increasing the use of the penholder where equations are written.
   c. Monitoring one's development and compensating for deficiencies and mistakes due to the feedback and correction received.

Six essential innovations make this product different from the existing ones on the subject. First, none of the available products display multiplication and division equations simultaneously on the same row. In this product, any numbers from 1 to 10 can be selected and multiplied by any of them, and the equation is visible on the front side. The division equation inverse of the multiplication one is simultaneously visible on the backside of the product.

Secondly, in this product, multiplication and division equations are written per the universal mathematical notation of 'equation' (3 x 5 = 15 or 15 ÷ 5 = 3). In most products, multiplication or division equations are illustrated without any equal sign. The 'equal' signs are presented in this product in all equations.

Third, in this product, components -multiplicands/quotients and products/dividends- defined as changing and equal to each other in multiplication and division equations written on the same row are respectively seen through round and square identical holes. This notation approach enables visual encoding of the components in equations. **In** the equations in the same row, multiplicands are equal to quotients and visible through round holes; products are equal to dividends and through square holes. The components defined as changing in equations are numbers on the lateral faces of hoops, which are visible through round and square holes on the product body. These numbers change by rotating hoops horizontally. Components -multipliers and divisors-are defined as fixed and equal to each other, and the signs (times: x, overs: ÷, and equals: =) in equations are printed on the same row on the product body and do not change. Therefore, this visual coding notation makes relationships between components in multiplication-division equations more straightforward.

Fourth, components, defined as changing in equations, are numbers on lateral faces of hoops that appear through round and square holes. Spring plungers, fixed to the product body and notches in the lateral faces of hoops, ensure that these numbers are placed into the exact center of the relevant holes. These plungers in the product allow hoops to rotate horizontally in a controlled way and to position by making a "click" sound.

Fifth, this product simultaneously shows multiplication equations of multiplicands from 1-10 multiplied by different multipliers from 1-10 and division equations where divisors from 1-10 divide different dividends. Thus, this product displays the commutative property of multiplication (replacing multiplicands with multipliers does not change the product), all factors from 1-10 (multipliers/multiplicands) of any product in the multiplication table, or all perfect squares of 1-10 by writing the relevant multiplication equations. Similarly, by writing the relevant division equations, this product displays all exact divisors and quotients from 1-10 of all dividends in the division table.

Sixth, almost none of the existing products have a gaming section. It is crucial to motivate pupils to use this or similar products. A fun and educational game that allows them to play individually or in groups was developed to overcome this issue. Considering game numbers in the game matrix and their equation frequencies, educational game elements -dynamics, mechanics, rewards- and features, the same or similar game has not been encountered in patent databases. This game increases pupils' motivation to use the product and thus enables them to learn and reinforce forward-backward rhythmic counting and multiplication-division tables. These innovations are explained in detail with examples in the following parts of the specification.

Generally, all available products are designed in bigger and two-dimensional sizes. On the other hand, this product was designed in 3D in smaller sizes, showing forward-backward rhythmic counting in columns and rows and simultaneously showing multiplication-division equations per universal mathematical notation. Most existing products only display forward-rhythmic counting and multiplication equations, usually in blocks, but not in universal mathematical notation (equation). On the other hand, this product allows rhythmic counting backward-forward and writing multiplication-division equations in blocks and modularly. This invention helps teachers teach the relevant topics in primary school mathematics courses and helps pupils do exercises and homework.

**In** addition to the applications mentioned earlier, there are other applications on the subject. However, only those directly related to this application regarding subject and scope are included here. Most of the products in the examined applications have some disadvantages. They can be summarized as follows: considering the level of primary school pupils, most products are complex as they are above the level of their cognitive development; this makes it difficult for them to understand and use individually. Furthermore, since most of the products consist of many independent parts, they are both difficult to produce by manufacturers and to be used and stored by pupils and teachers. Besides, being large and heavy in mass makes it difficult for the pupils to carry and use them. As for the product in this invention, it is ergonomic to carry, use, and store, as it is small in size, light in weight, and consists of one or two parts. Thus, pupils can store the product wherever they want, easily carry it, hold it with one hand, and practically use it with the other.

The product consists of two parts: a penholder and a toy. While the penholder allows pupils to count backward-forward rhythmically and write multiplication-division equations, the toy enables pupils to randomly select numbers that are products or dividends in equations written on the penholder within the scope of the game played individually or in groups.

**In** summary, most existing products neither cover multiplication-division equations together nor allow pupils to use the product anywhere or anytime as much as they want. Furthermore, most products do not allow pupils to play games individually or in groups. Moreover, most examined products only serve a limited number of pupils in classroom settings under the supervision of a teacher. However, pupils can use the product in this application to learn forward-backward rhythmic counting and multiplication-division tables without the time and place limitations and as much as they want to play games on the subject individually or in groups. The product is particularly appropriate for pupils at the level of cognitive development who are in the concrete operational stage. These features increase the motivation to use the product as it facilitates its use and adds fun. Using the product as an open/closed box or penholder is also possible.

Using plastic, wood, or both in manufacturing the product makes it strong, invulnerable, and lightweight, making it more practical and ergonomic. Since the product has no electronic or magnetic parts, it does not emit radiation or generate a magnetic field. In addition, the entirely mechanical product does not have any energy source, such as batteries or adapters.

The product is designed according to product-oriented instructional design models. Furthermore, it considers visual design elements (line, shape, area, size, texture, and color) and its principles (integrity, balance, emphasis, alignment/hierarchy, and proximity); therefore, it is suitable for primary school pupils' pedagogy, and it helps them learn accordingly. Additionally, universal design principles (equitable use, flexibility, simple and intuitive use, perceptible information, tolerance for error, low physical effort, and size and space for approach and use) were considered while designing the product.

The visual coding notation (e.g., ⑤ x 3 = 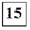 and 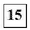 ÷ 3 =⑤), aforementioned as the third innovation above, helps pupils understand equations and the relationships between their components. Through this notation, pupils perceive that in the product, "dividend is a product, the divisor is a multiplier, and the quotient is multiplicand" in multiplication and division equations written simultaneously on the same row and that these equations are the inverse. In this sense, the product does not immediately give the results of multiplication or division as they are in electronic calculators. Instead, pupils write multiplication or division equations on the penholder by themselves. Thus, pupils see the results of multiplication-division operations and experience the rhythmic forward-backward counting process that results in these operations. In conclusion, counting rhythmic forward-backward and writing multiplication-division equations help pupils learn these subjects in a relational and meaningful way.

Thanks to this product, primary school pupils, whether for learning (homework, drill, and practice) or entertainment (game) purposes, count rhythmically ten times forwards-backward with numbers 1-10, practice in multiplication and division tables by writing equations, and they learn the multiplication and division tables with these practices. In addition, using signs of times, over, and equal (x, ÷, =) in the equations written on the product helps pupils learn the concept of an equation in mathematics. In this sense, this invention eliminates product drawbacks and offers innovations and advantages.

### Description of Figures:

The primary purpose of the figures given in the application in detail is to provide a better understanding of the invention's technical details and its claims. Therefore, numeric references were given to all parts of the figures, and their functions and features were explained. A comprehensive, conceptual, and functional explanation made the detailed technical description of the present invention of the seven figures given.
- Figure 1:: Product multiplication side
- Figure 2:: Product division side
- Figure 3:: Top of the product without toy
- Figure 4:: Multiplication side of hoops and product multiplication side without hoops
- Figure 5:: Division side of hoops and product division side without hoops
- Figure 6:: Toy
- Figure 7:: Game monitoring-scoring form

### Description of the References in the Figures

1: Product multiplication side
2: Multiplication side fixed area
3: Multiplication side fixed area: times signs
4: Multiplication side fixed area: multipliers
5: Multiplication side fixed area: equal signs
6: Multiplication side changing area: multiplicands
7: Multiplication side changing area: products
8: Multiplication side changing area: round hole for hoop 10
9: Multiplication side changing area: square hole for hoop 10
10: Handle
11: Product body
12: Hoop 10 rotator
13: All hoop rotators
14: Product top face
15: Product bottom face
16: Multiplication side fixed area: times sign of hoop 10
17: Multiplication side fixed area: multiplier of hoop 10
18: Multiplication side fixed area: equal sign of hoop 10
19: Slot and lock of hoop 10
20: Slots-locks of all hoops
21: Product division side
22: Division side fixed area
23: Division side fixed area: over signs
24: Division side fixed area: divisors
25: Division side fixed area: equal signs
26: Division side changing area: dividends
27: Division side changing area: quotients
28: Division side changing area: square hole for hoop 10
29: Division side changing area: round hole for hoop 10
30: Division side fixed area: over sign of hoop 10
31: Division side fixed area: divisor of hoop 10
32: Division side fixe d area: equal sign of hoop 10
33: Multiplication side of hoops
34: Division side of hoops
35: Penholder hole
36: Lid of hoops
37: Ten spring plungers
38: Ten notches
39a, 39b and 39c: Unused lateral face of hoops
40: Bearing of hoops
41: Top face of hoops
42: Multiplication side of hoop 1
43: Multiplication side of hoop 2
44: Multiplication side of hoop 3
45: Multiplication side of hoop 4
46: Multiplication side of hoop 5
47: Multiplication side of hoop 6
48: Multiplication side of hoop 7
49: Multiplication side of hoop 8
50: Multiplication side of hoop 9
51: Multiplication side of hoop 10
52: Multiplication side matrices of hoops
53: Product multiplication side without hoops
54: Multiplication side matrices of hoops and product multiplication side without hoops
55: Division side of hoop 1
56: Division side of hoop 2
57: Division side of hoop 3
58: Division side of hoop 4
59: Division side of hoop 5
60: Division side of hoop 6
61: Division side of hoop 7
62: Division side of hoop 8
63: Division side of hoop 9
64: Division side of hoop 10
65: Division side matrices of hoops
66: Product division side without hoops
67: Division side matrices with hoops and product division side without hoops
68: Game instruction area
69: Selection area
70: Transparent lid
71: Game numbers
72: Legend area of equation frequency
73: Game numbers with one equation
74: Game numbers with two equations
75: Game numbers with three equations
76: Game numbers with four equation
77: Oval ball
78: Field of game numbers
79: Equation type
80: Equation key
81: Player performance
82: Third player's performance
83: Multiplication equations for 2
84: Division equations for 2
85: Third player's multiplication scoring area for 2
86: Third player's division scoring area for 2
87: Equation type for 2: multiplication
88: Equation type for 2: division
89: Selected number with the oval ball: 2
90: Players' total score area
91: Total score area of the third player

### Detailed Technical Description of the Invention

The product in this invention is in the form of an upright cylindrical toy penholder with a handle on the top, of which a toy can be attached/detached. The bottom of the product is permanently closed; the top is closed and functions as a box when the toy is attached, but when the toy is not, it is open and functions as a penholder. On the lateral face of the product, there are multiplication equations, division equations, a handle, all hoop rotators, and slots-locks of all hoops. Inside the product, there are ten hoops on top of each other and ten spring plungers fixed to the handle. The product has a toy that pupils play on the subject, too.

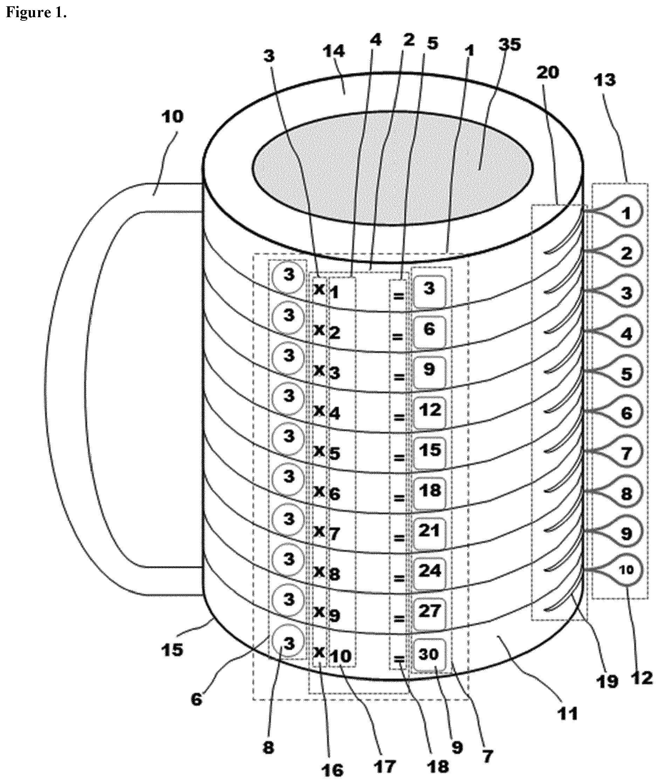

Figure 1 displays multiplication equations on the lateral face of the product's front side. In Figure 1, the product multiplication side (1), the product top face (14), the handle (10), all hoop rotators (13), and slots-locks of all hoops (20) are seen. Multiplication equations are written on the product multiplication side (1). Multiplication side fixed area (2) consists of multiplication side fixed area: times signs (3), multipliers (4), and equal signs (5). Product multiplication side (1) changing areas consist of multiplication side changing area: multiplicands (6) and multiplication side changing area: products (7).

The notation of multiplication equations written on this side (1) is appropriate to the universal mathematical notation of equations. It is formulated as ***"multiplicand*** x multiplier *= **product."*** In this notation, parts of "x multiplier =" are defined as fixed, but others, ***"multiplicand"*** and ***"product"*** are defined as changing. This definition requires that on the product multiplication side (1) equations "x," "multiplier," and "=" parts must be fixed/printed on the product body (11), but "multiplicand" and "product" parts must be changing on the product body (11) and they appear as changing. In summary, the multiplication side fixed area (2) does not change at all (it is printed), but the multiplication side changing areas, multiplicands (6), and products (7) change and take different values when the hoops rotate. The multiplicands (6), defined as multiplication side changing area in equations, display steps of multiples in forward or backward rhythmic counting through the round holes, while the products (7) display multiples through the square holes, which helps pupils understand the relationship between multiplication equations and forward rhythmic counting.

To illustrate, based on Figure 1, if a pupil wants to write the equation "2 x 10 = 20" on the tenth row of product multiplication side (1), s/he first holds the handle (10) with his left hand and holds hoop ten rotator (12) with the right hand and then rotates hoop ten rotator (12) in slot and lock of hoop 10 (19) towards clockwise until a "click" sound is heard, and then s/he writes the **②** x **10 =** 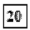 equation. This equation is written by giving ***values, signs,*** and references as 2 (8) *x* (16) 10 (17) = (18) *20* (9). In this equation, the ones written with references of 16, 17, and 18 are fixed, but the ones with references 8 and 9 are changings. As the pupil moves this rotator (12) clockwise, s/he sees multiplication equations on this row showing multiples 10 as a product. If s/he rotates other hoop rotators (between 1-9) clockwise once and stops on the first sounds (positioning the hoops 1-9), then s/he writes multiplication equations with 2 on 1-9 rows (2 x 1 = 2, 2 x 2 = 4, 2 x 3 = 6...... 2 x 9 = 18) and sees them all at once on product multiplication side (1).

Examining Figure 1, the multiplication side fixed area: times signs (3) and multipliers (4) are placed close to the multiplication side changing area: multiplicands (6). For pupils to perceive and comprehend multiplication equations more easily, product multiplication side (1) was designed considering the integrity and proximity of visual design principles. Otherwise, the multiplication equation would appear as ② x 10 = 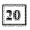 , note ② x 10 = 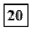 . In this way, the principles of grouping in perception, integrity, and proximity support the product's universal mathematical notation of equations. Since numbers and signs are printed on the product body (11) and lateral face of hoops, a font with serifs that increase legibility can be preferred. To provide legibility and not to strain eyes, it can be preferable that the ground color of the product body (11) is straw yellow, the ground color of the hoops' lateral face is white, and the color of numbers and signs in equations is black.

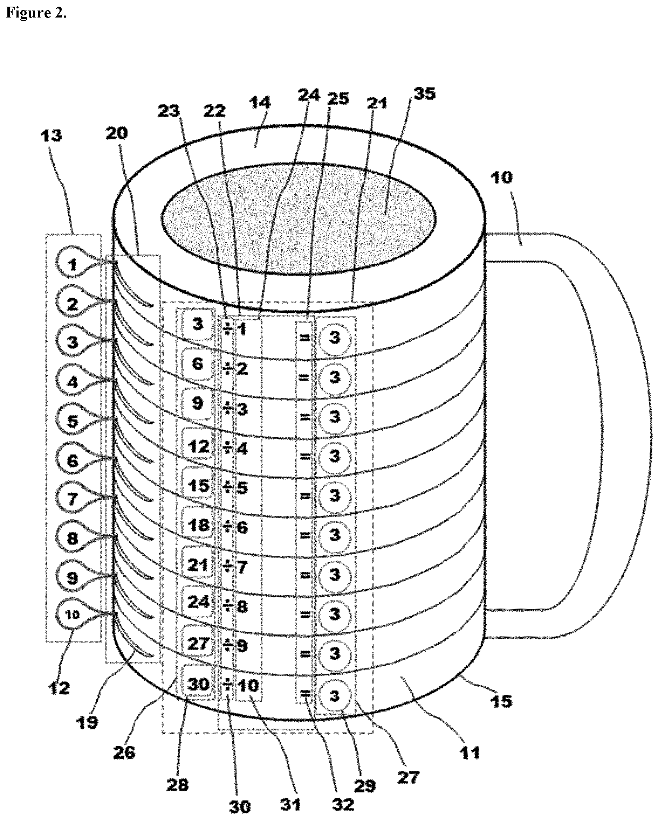

Figure 2 displays division equations on the backside of the product lateral face. In this view, the product division side (21), product top face (14), handle (10), all hoop rotators (13), and slots-locks of all hoops (20) are seen. As in the product multiplication side (1), the division equations on the product division side (21) are also appropriate to universal mathematical notation. The division equation is formulated as ***"dividend*** ÷ divisor = ***quotient.** "* The parts of "÷ divisor =" are defined as fixed, but others, ***"dividend"*** and ***"quotient,"*** are defined as changing. This definition requires that the "÷," "divisor," and "=" parts must be fixed/printed on the product body (11), but ***"dividend"*** and ***"quotient"*** parts must be changing on the product body (11) and they appear as changing. In summary, the division side fixed area (22) does not change at all, but the division side changing areas, dividends (26), and quotients (27) change and take different values when the hoops rotate. The quotients (27), defined as the division side changing area in equations, display which steps of backward or forward rhythmic counting through round holes, while the dividends show multiples through square holes, which helps pupils understand the relationship between division equations and backward rhythmic counting.

For example, in Figure 2, if a pupil wants to write equation "20 ÷ 10 = 2" on the tenth row of the product division side (21), s/he first holds the handle (10) with his right hand, and s/he holds hoop ten rotator (12) with his left hand. Then s/he moves hoop ten rotator (12) in the slot and lock of hoop 10 (19) towards anticlockwise until a "click" sound is heard, and finally, s/he writes the 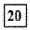 **÷ 10 = ②** equation. If this equation is represented with its ***values, signs,*** and references, the related equation is ***20*** (28) ÷ (30) ***10*** (31) = (32) 2 (29). In this equation, references 30, 31, and 32 are fixed, but 28 and 29 are changings. Similarly, if s/he rotates the other hoop rotators (positioning between 1-9) anticlockwise once and stops on the sounds, then s/he writes division equations by 2 on 1-9 rows (2 ÷ 1 = 2, 4 ÷ 2 = 2, 6 ÷ 3 = 2.... and 18 ÷ 9 = 2) and sees them all at once on product division side (21).

As can be understood from Figure 1 and Figure 2, the notation design of equations and their components is as follows: **"*multiplicand*** x multiplier = ***product*"** and ***"dividend*** ÷ divisor = ***quotient."*** In each row, the ***multiplicand*** equals the ***quotient,*** and the ***product*** equals the ***dividend.*** In this notation, ***multiplicand*** and ***quotient*** appear through *round* holes, and ***product*** and ***dividend*** appear through *square* holes (② x 10 = 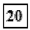 and 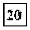 ÷ 10 = ②). Visual coding notation of these inverses of each other's equations on the same rows enables pupils to notice how components of equations change their values and positions based on rhythmic counting and to understand the relationships between them.

Considering the product multiplication side (1) as a table, there are five columns and ten rows. In the first column, round holes display the steps of multiples (multiplication side changing area: multiplicands (6)). The second column has multiplication side fixed area: times signs (3). The third column contains fixed numbers from 1 to 10 (multiplication side fixed area: multipliers (4)). The fourth column has a multiplication fixed area: equal signs (5). In the fifth column, square holes display multiples of 1-10 (multiplication side changing area: products (7)). There are also five columns on the product division side (21) parallel to the multiplication side. In the first column, square holes display multiples of numbers 1-10 (division side changing area: dividends (26)). The second column has a division side fixed area: over signs (23). The third column contains fixed numbers from 1 to 10 (division side fixed area: divisors (24)). The fourth column has a division fixed area: equal signs (25). In the fifth column, round holes display the steps of multiples (division side changing area: quotients (27)).

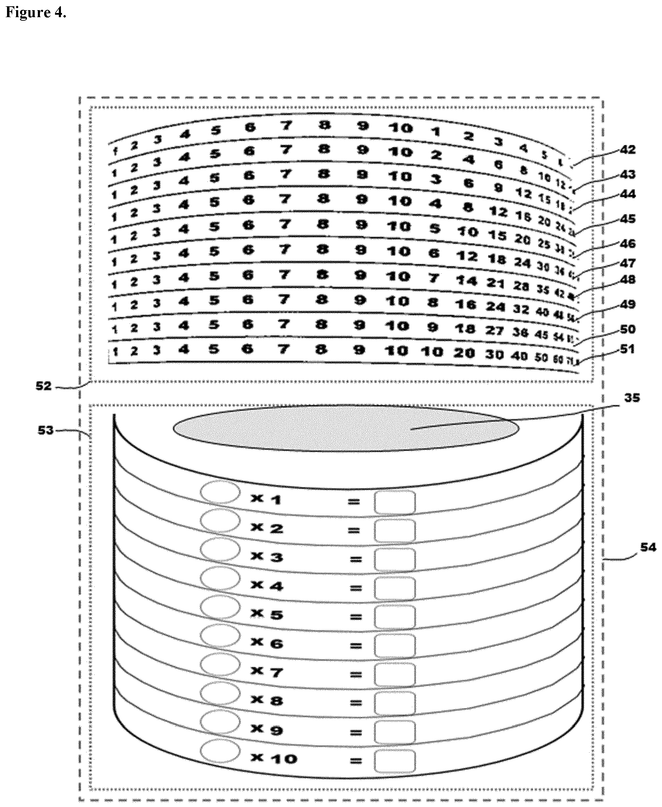

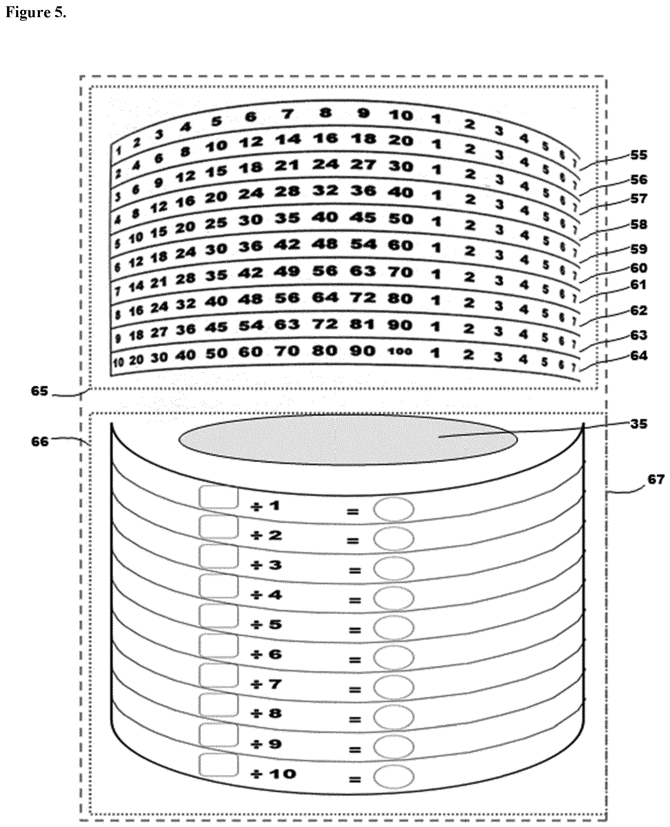

All hoop rotators (13), located right in the middle of product multiplication (1) and division (21) sides and opposite handle (10), change multiplicands (6) and dividends (26) in the first columns. With these changings (6, 26), the products (7) and quotients (27) of these equations change dynamically as multiplicands (6) and dividends (26) simultaneously. When no action is taken on the product, all multiplicands (6) on the product multiplication side (1) are 1, all multipliers (4), and all products (7) are numbers from 1 to 10 vertically. When no action is taken on the product, all dividends (26) and all divisors (24) are numbers from 1 to 10 vertically, and all quotients (27) are 1. This situation is easily understood if matrices in multiplication (52) and division (65) sides of hoops in Figure 4 and Figure 5 are examined. When no action is taken on the product, for example, for hoop 3, equations on multiplication (1) and division (21) sides are ① x 3 = 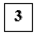 and 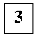 ÷ 3 = ①, but in hoop three's first clockwise rotation, these equations are respectively ② x 3 = 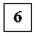 and 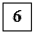 ÷ 3 = ②. This is valid for all equations on each row's product multiplication (1) and division (21) side.

The individual rotations of hoops allow pupils to multiply numbers 1-10 with each other, both modularly and as a block, and to divide the dividends (products) into any of the divisor and quotient (multipliers and multiplicands: factors). In other words, multiplication equations that multiply the multiplicands from 1-10 with different multipliers and division equations where divisors from 1-10 divide different dividends can show simultaneously. The fact that the multiplication equations showing the same products are visible at the same time on different rows (for example, 2 x 6 = 12, 6 x 2 = 12, 3 x 4 = 12, 4 x 3 = 12) enables pupils to comprehend commutative property of multiplication (replacing multiplicands with multipliers does not change the product) and the factors of products. Furthermore, perfect squares of numbers from 1-10 are obtained by writing equations in which multiplicands are equal to multipliers in each row on the product multiplication side (1). On the product division side (21), being able to display simultaneously the same dividends (for example, 12 ÷ 6 = 2, 12 ÷ 2 = 6, 12 ÷ 4 = 3, and 12 ÷ 3 = 4) on different equations in different rows makes it possible to see dividends' 1-10 divisors and quotients.

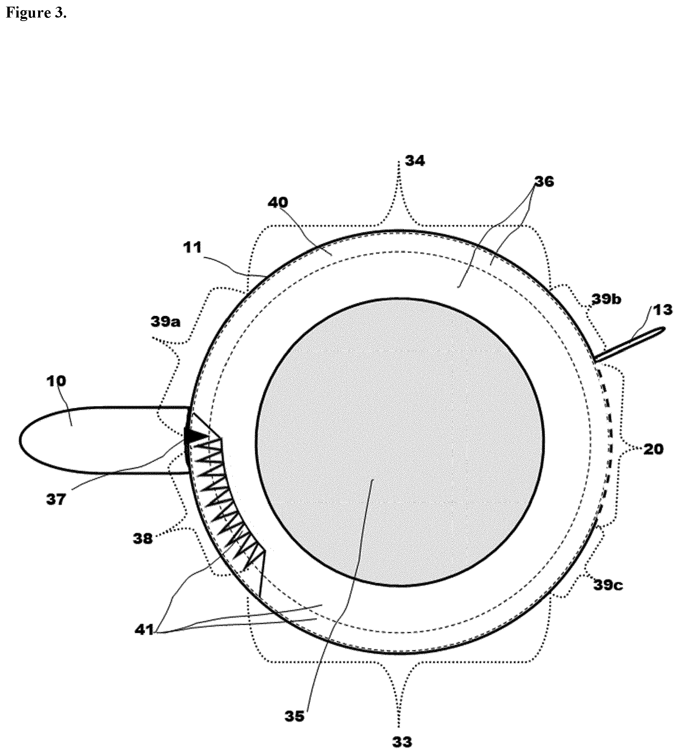

Figure 3 illustrates the top of the product without the toy. Figure 3 shows the place of the multiplication side of hoops (33), division side of hoops (34), penholder hole (35), lid of hoops (36), ten spring plungers (37), ten notches (38), unused lateral face of hoops (39a, 39b, 39c), bearing of hoops (40), and top face of hoops (41). The hoops are divided into eight equal parts (slices) with a 45° arc angle. These are placed on hoops as follows: two of them are for the multiplication side (33), two of them are for the division side (34), one of them is for slots-locks, one of them is for ten notches (38) on lateral face, one of them is for unused lateral face (39a) and two of them is for other unused lateral faces (39b and 39c). According to the notation of equations, multiplication (33) and division (34) sides of hoops are placed symmetrically on the front and back sides. Slots-locks of all hoops (20) are symmetrically in the middle of them (33 and 34) and opposite to the handle (10). This notation determines the placement of matrices (52 and 65) explained in Figure 4 and Figure 5 in detail on the lateral faces of hoops. Figure 3 shows only hoop 1's bearing as it is a top view, but the bearings of hoops (40) are fixed to the product body (11) so that hoops in the product can rotate in their bearings without affecting each other.

Each ten spring plungers (37), positioning the hoops horizontally where the handle (10) is united on the product body (11), is precisely opposite to ten notches (38) on the lateral face of the hoops. In any rotation of all hoop rotators (13), one of ten notches (38) on each hoop comes upon the ball of the spring plunger at the same row. Balls of all spring plungers (37) are located into one notch on the lateral face of each hoop; thus, the related hoop rotates in a controlled manner, and the numbers in matrices (52 and 65) position into the center of identical holes and make a "click" sound at each positioning. The balls of ten spring plungers (37) are placed into the first notches when no action is taken on the product. If pupils wish to write equations in the product using all hoop rotators (13), they can rotate hoops clockwise or anticlockwise up to 9 notches (steps). Once all hoop rotators (13) are rotated nine steps in one direction (clockwise or anticlockwise), they (13) reach the end of the slots and can no longer rotate hoops in the same direction, so the slots-locks of all hoops (20) become the locks of the rotators (13). Equations inverse each other on the same row on multiplication (1) and division (21) sides are simultaneously written in each clockwise or anticlockwise rotation of hoops.

The multiplication side of hoops and the product multiplication side without hoops are displayed together in Figure 4. In Figure 4, multiplication side matrices of hoops (52: hoop 1:42, hoop 2: 43, hoop 3: 44, hoop 4:45, hoop 5: 46, hoop 6: 47, hoop 7: 48, hoop 8: 49, hoop 9: 50 and hoop 10: 51) between 1-10 exist. The upper section of Figure 4 displays the multiplication side matrices of hoops (52). The lower section of Figure 4 shows the product multiplication side without hoops (53). The upper section of Figure 4 -multiplication side matrices of hoops (52)- is behind the lower section of Figure 4 -product multiplication side without hoops (53). That is, there are multiplication side matrices of hoops (52) on the lateral faces of 10 hoops that can individually rotate horizontally behind the product body (11). Numbers in these matrices appear as changing components of equations (multiplicand: 6 and quotient: 27 are seen through round holes - product: 7 and dividend: 26 are seen through square holes). If the product was designed as two nested cylinders without individual hoops, all equations on the product could have been written in blocks, not in modular. However, individual hoops in the product enable horizontal and vertical forward-backward rhythmic counting on both row and column basis and to write the desired multiplication-division equations in different rows modularly. The Ability to write individual multiplication equations enables pupils to study the commutative property of multiplication, all perfect square numbers of 1-10, forward-backward rhythmic counting, and multipliers/multiplicands (factors) of products in the multiplication table.

Figure 5 demonstrates the division side of hoops and the product division side without hoops. In Figure 5, division side matrices of hoops (65: hoop 1: 55, hoop 2: 56, hoop 3: 57, hoop 4: 58, hoop 5: 59, hoop 6: 60, hoop 7: 61, hoop 8: 62, hoop 9: 63 and hoop 10: 64) between 1-10 exist. When the multiplication side matrices of hoops (52) in Figure 4, division side matrices of hoops (65) in Figure 5, and the notation of equations in the product are considered together, the lateral faces of all hoops consist of two matrices each of multiplication (52) and division (65) side of hoops. When all hoops are put at each other, there are four matrices, two for multiplication and two for division, with ten rows and ten columns (10 x 10) on the lateral faces of hoops. These matrices are of two types: multiplication (52) and division (65) side matrices of hoops. **In** the first matrix, the numbers 1-10 from left to right are written ten times, one under the other. Therefore, each row of the first matrix has numbers of 1-10 from left to right. For example, the numbers on row 3 and column 3 in the first matrix follow respectively: from left to right: 1, 2, 3, 4, 5, 6, 7, 8, 9, 10, and from top to bottom: 3, 3, 3, 3, 3, 3, 3, 3, 3, 3. The numbers 1-10 in the second matrix are forward rhythmic counts ten times in each row and column. Therefore, numbers in a row and column are the same in the second matrix. For example, the numbers of row 3 and column 3 in this matrix are the same from left to right and from top to bottom, and they are 3, 6, 9, 12, 15, 18, 21, 24, 27, 30. The first and second matrices are placed from left to right on multiplication side matrices of hoops (52), and the second and first matrices are placed from left to right on division side matrices of hoops (65). This placement serves for the notation of the equations in the product.

A game was designed to increase pupils' motivation to use the product and to enable them to study the subject enthusiastically. While developing the game, children's pedagogies, cognitive development and learning characteristics, and educational game elements were taken into account. The game requires a penholder, toy part, and game monitoring-scoring form.

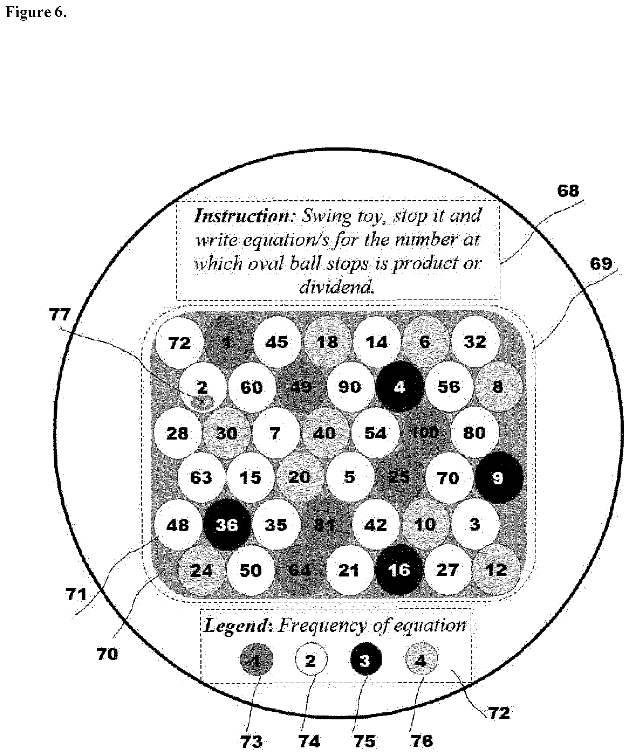

Figure 6 shows the toy used for randomly selecting the product or dividend of the equation to be written. The toy was designed as a portable transparent lid, attachable and detachable to the product's top face (14). When the toy is attached, the product is used as a closed box; when detached, it is used as a penholder. The toy is divided into three areas: game instruction area (68), selection area (69), and legend area of equation frequency (72). Game instruction area (68) describes how to determine equations to write on the penholder: *"Swing the toy, stop it, and write equation*/*s for the number at which the oval ball stops is product or dividend."* The transparent lid (70), game numbers (71), and oval ball (77) are within the selection area (69). The legend area of equation frequency (72) indicates the total frequency of equation/s for each game number (71). The oval ball is two-faced with thin edges and camber in the middle. This ball stops only on one of its two faces, and one face has a 'times sign' (x) and the other an 'over sign' (÷). To choose only one game number and its equation type with the oval ball (77), game numbers are written inside hemisphere pits designed with no space among them.

While considering the frequency of products or dividends in multiplication and division equations in developing the game, 42 different numbers have been detected. These numbers, which consist of products and dividends equal to each other in multiplication and division equations, comprise the game numbers (71) and the game matrix (71). **In** all equations in the product, the frequency of products or dividends is one (73), two (74), three (75), or four (76). The game numbers (71) have 42, and the values and equation frequencies are the same for the multiplication and division equation. These 42 numbers were randomly placed in a 6-row and 7-column game matrix. A transparent lid (70) ensures that the oval ball (77) only moves in the selection area (69) and stops on one of the game numbers (71). The oval ball in the toy stops randomly in one of the 42 game numbers. The sign (x or ÷) on the top face of the oval ball indicates the type of equations (multiplication or division) to be written. The background of the number the oval ball stands on indicates the number of products/dividends in the equations. The pupil looks at the legend on the toy to know how many times the number appears in equations, that is, the equation frequency. The legend displays to the pupil the frequency of the number in equations (the number of equations in which the number is written). For example, if an oval ball (77) times sign (x) is on the top face and stands on the pit with the number 12, the player understands from the legend area of equation frequency (72) that 12 is the product at four equations and writes them on penholder as 2 x 6 = 12, 6 x 2 = 12, 3 x 4 = 12 and 4 x 3 = 12.

When the game is played for the first time, the game and the game monitoring-scoring form are explained to the player/s by an adult (preferably a teacher) who knows the subject and game. The game monitoring-scoring form has all game numbers with their equations and player performance. Thus, all equations written or not written in the game are recorded on the form, and performances are developed by feedback, correction, compensation, etc. Even when the player plays the game individually, s/he shakes the toy, takes the number and its type of equation where the oval ball (77) stands on into account, first verbalizes the equality, or writes it down on paper. Then, s/he writes each equation on penholder at first attempt and checks it from the form, and if it is correct, gives 1 point to their performance in the form, and zero if it is wrong.

Writing 200 equations on a penholder in the game causes players to get tired and bored in terms of cognitive load; therefore, the game can be played and completed in more than one session. Players can monitor their progress and improve if a date is assigned for different game sessions. Unfortunately, since there is no competition and rivalry in individual games compared to multiplayer games, scoring loses importance, and making right or wrong gains importance. Therefore, individual game depends on intrinsic rather than extrinsic motivation. However, when pupils play as a team, socialization, competition, and chance make the game exciting, funny, and rivaling. In this regard, it is recommended to play games in groups. As all players have an equal right to play the game, the order of playing is not an advantage. If a number with a high equation frequency is chosen in the game, or if a number played but not completed is chosen, there is a chance factor depending on the equation frequency of that number.

In multiplayer games, firstly, each player shakes the toy and stops it, and the oval ball stands on one of the game numbers. Then, players are expected to start the game from the highest number to the lowest one. Those players repeat the same approach if the ball stops on the same number in determining the gaming order. The first player shakes the toy, stops it, and randomly selects one of the game numbers and its equation type using the oval ball and determines how many equations to write considering the legend. The player verbally expresses equations to write on the penholder or a blank paper and then writes the equations on the related rows at once. The player takes 1 point for each correct equation written in one attempt but takes 0 points for all other occasions. The player plays as long as s/he writes equations correctly during their turn, but the turn is shifted to the next player if the player miswrites the equation. The game number to be played is checked from the game monitoring-scoring form; if all equations of that number had been written entirely correctly, that number is considered completed and is not played again. However, another number, not completed yet, is chosen. If the game number is played but its equations are not completed, only incomplete equations of the game number are played. The game ends when the last equation of game numbers is written wholly and correctly. When the game is over, the scores of each player are summed up, their total scores are compared, and the one with the highest score wins. The success order of other players is determined based on the total scores they have totaled. The game monitoring-scoring form is essential to monitor the written or unwritten equations and players' performances in games with multiplayer. This form (or its photocopy) gives players endgame feedback on written or unwritten equations. Thus, the game continues to be played from where it left off without interruption. Players receive written feedback and corrections about their performances and make compensation work. The game is played fairly and contributes to pupils' learning.

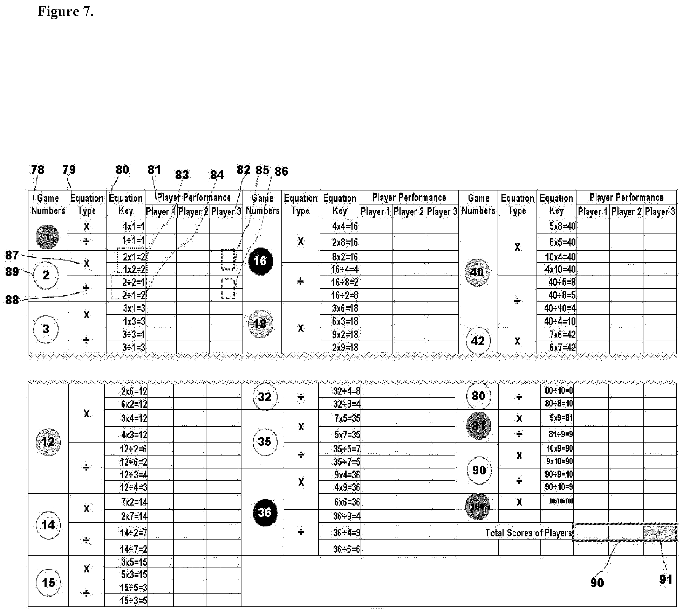

Figure 7 illustrates the game monitoring-scoring form. In this form, there are fields of game numbers (78), equation type (79), equation key (80), player performance (81), and the third player's performance (82). Figure 7 shows multiplication equations for 2 (83), division equations for 2 (84), the third player's multiplication scoring area for 2 (85), the third player's division scoring area for 2 (86), equation type for 2: multiplication (87), equation type for 2: division (88), selected number with oval ball: 2 (89), players' total score area (90) and total score area of third player (91). The field of game numbers (78) has 42 game numbers in ascending order from top to bottom. The equality type of number on which the oval ball (77) stands is equation type (79). The equation type (79) displays types of equations as signs (x or ÷) in-game monitoring-scoring form. While checking the equations written in a game, all equations of the game numbers (71) are based on the equation key (80). After controlling equations, scoring about the player performance area (81) is made.

Three players are in the in-game monitoring-scoring form; the number of players can be increased if desired. However, including new player/s in the game causes other players to wait longer to play and get bored. Therefore, the number of players in a game is recommended to be limited. Suppose that the selected number with the oval ball, 2 (89), is chosen twice by the third player and equation type for 2: multiplication (87) and division (88). To check the performance of this player, multiplication equations for 2 (83) are checked, and "1 point" for the correct equation and "0 point" for the wrong ones are written in the relevant scoring area (85). A similar procedure is followed to control the division equations' performance of the third player. When the game is over, scores in player performance (81) are added up for each player, and success order is determined by comparing players' total score area (90).

### Implementation of the Invention to the Industry

This product is cylindrical, so using plastic material for the body, handle, and hoops is better. However, plastic, wood, and metal or their appropriate combination can be used for the other parts of the product. Furthermore, since the lid of the selection area of game numbers and equation type on the toy is transparent, an appropriate raw material or semi-finished products, preferably transparent plastic, can be used. Only balls and springs of spring plungers that position hoops and rotate them controlled can be made of metal or be used as semi-manufactured products. In summary, appropriate raw materials and semi-finished products can produce different parts. Since the product is mechanical and intended primarily for primary school pupils, it requires using resistant and healthy materials for the product's longevity and pupils' health. The product is developed for the education sector and can be quickly produced in mass with automation systems in relevant production areas of the industry; therefore, the product has properties applicable to the industry.

## Claims

1. The invention is a concrete toy penholder that helps pupils learn forward/backward rhythmic counting, multiplication/division tables, and the relationships between inverse equations of multiplication-division and allows them to play a game on the subject individually or in groups, **characterized by**;
- displaying multiples of numbers 1-10, that allows forward/backward rhythmic counting, modularly on a row basis,
- displaying the multiplication equations of the numbers 1-10 and their inverse equations, division equations, simultaneously and modularly on a row basis by universal mathematical notation,
- displaying the relationships between the components in inverse multiplication-division equations,
- including 42 game numbers (71) that are product/dividends in the multiplication/division tables and the legend of the frequency (72) of their occurrence in equations.

2. In compliance with Claim 1, the toy penholder displays the factors 1-10 of the products in the multiplication equations on the multiplication side (1) with equations written modularly on a row basis and displays the divisors 1-10 of the dividends in the division equations on the division side (21) with equations written modularly on a row basis.

3. In compliance with Claim 1, the toy penholder displays the commutative property of multiplication, multiplicative identity, and the squares of numbers 1-10 on the multiplication side (1) with equations written modularly on a row basis.

4. In compliance with Claim 1, the toy penholder displays the relationships between the components in inverse multiplication-division equations by displaying those with equal values in changing areas (6 and 27, 7 and 26) of multiplication and division equations written on each row through round and square identical holes.

5. In compliance with Claim 1 and Claim 2, the toy penholder includes a toy that allows the pupils to play games on the subject individually or in groups, select game numbers (71) randomly, and enabling to write equations on the penholder as many as the equation frequency of that game number.

6. The invention comprising an upright cylindrical product body (11) with a handle (10), product multiplication side (1), product division side (21), fixed areas (2, 3, 4, 5), changing areas (6, 7), hoop rotators (13), ten spring plungers (37), bearings of hoops (40) on the inside of body (11), is **characterized by**;
- hoops (41) consisted of eight parts which have 45° arc angle,
- a multiplication side of hoops (33) and a division side of hoops (34) which are located in the hoops and move symmetrically relative to each other within the body due to the effect of the hoop rotators (13),
- ten notches on lateral face of hoops (38) positioned opposite the spring plungers (37) which are stopping the hoops from rotating in the body.

7. The hoops (41) as claimed in claim 6, is **characterized by**, it has two multiplication side of hoops (33), two division side of hoops (34), slots-locks of all hoops (20), notches on lateral face of hoops (38), unused lateral face of hoops (39a) and unused lateral face of hoops (39b and 39c).

## Patentansprüche

1. Bei der Erfindung handelt es sich um einen greifbaren Spielzeug-Stifthalter, der Schülern das Vorwärts-Rückwärts-Rhythmisches Zählen, das Multiplikations-Divisionstabelles und die Beziehungen zwischen Elementen in Umkehroperationen sowie Multiplikations-Divisionsgleichungen beibringt und es ihnen ermöglicht, einzelne oder mehrere Spiele zu diesem Thema zu spielen, und seine Merkmale sind:
- Es ermöglicht ein vorwärts/rückwärts rhythmisches Zählen auf Spaltenbasis und modular auf Zeilenbasis, indem es ein Vielfaches der Zahlen 1-10 zeigt,
- Es zeigt die Multiplikationsgleichungen der Zahlen 1-10 und die umgekehrten Divisionsgleichungen modular und simultan auf Zeilenbasis mit universeller mathematischer Notation,
- Es zeigt die Beziehungen zwischen Elementen in Multiplikations-Divisionsgleichungen, die umgekehrte Operationen sind,
- Multiplikation/Division in den Gleichungen der Multiplikation/Division umfasst die Anzahl von 42 Spielzahlen (71) und den Indikator (72), der die Häufigkeit ihres Auftretens in den Gleichungen anzeigt.

2. Gemäß Anspruch 1 zeigt der Spielzeug-Stifthalter Multiplikatoren 1-10 der Multiplikationsgleichungen auf der Multiplikationsseite (1) auf Zeilenbasis und Divisoren 1-10 der Divisionsgleichungen auf der Divisionsseite (21) auf Zeilenbasis mit modular geschriebenen Gleichungen.

3. Gemäß Anspruch 1 zeigt der Spielzeug-Stifthalter die sich ändernde Eigenschaft der Multiplikation, der multiplikativen Identität und der Quadrate der Zahlen 1-10 mit modular geschriebenen Gleichungen auf der Multiplikationsseite (1).

4. Gemäß Anspruch 1 zeigt der Spielzeug-Stifthalter die Beziehungen zwischen Elementen in der umgekehrten Operation Multiplikations- Divisionsgleichungen durch runde und quadratische identische Löcher von gleichem Wert in den variierenden Bereichen (6 und 27, 7 und 26) dieser Gleichungen, die in jeder Zeile geschrieben sind.

5. In Übereinstimmung mit Anspruch 1 und Anspruch 2 umfasst der Spielzeug-Stifthalter ein Spielzeug, das es den Schülern ermöglicht, Spiele zu dem Thema einzeln oder in einer Gruppe zu spielen, die Anzahl der Spielzahlen (71) zufällig auszuwählen und eine Gleichheit in den Stifthalter zu schreiben, wie die gleiche Häufigkeit der ausgewählten Spielzahl vorliegt.

6. Die Erfindung umfasst einen aufrechten zylindrischen Produktkörper (11) mit Haltegriff (10), Produktmultiplikationsseite (1), Produktdivisionsseite (21), festen Bereichen (2, 3, 4, 5), variierenden Bereichen (6, 7), Ringwandlern (13), zehn Federstößeln (37), Ringlagern (40) an der Innenseite des Körpers (11);
- Ringe (41) bestehend aus acht Teilen mit 45° Bogenwinkel,
- die Multiplikationsseite (33) und Divisionsseite (34) der Ringe, die in den Ringen angeordnet sind und sich durch Drehen der Ringwandler (13) symmetrisch zueinander im Körper bewegen,
- Es ist durch zehn Kerben (38) gekennzeichnet, die sich auf der Seitenfläche der Ringe gegenüber den Federstößeln (37) befinden und die Drehung der Ringe im Körper stoppen.

7. Gemäß Anspruch 6 sind die Ringe (41) **gekennzeichnet durch** zwei Multiplikationsseiten (33) der Ringe, zwei Divisionsseiten (34) der Ringe, Schlitzverschluss (20) aller Ringe, Kerben (38) an der Seitenfläche der Ringe, unbenutzte Seitenflächen (39a, 39b und 39c) der Ringe.

## Revendications

1. L'invention est un porte-plume jouet concret qui aide les élèves à apprendre le comptage rythmique en avant-arrière, les tables de multiplication-division, ainsi que les relations entre les éléments dans les équations de multiplication-division qui sont des opérations inverses, et qui les permet de jouer individuellement ou en groupe à des jeux liés au sujet, **caractérisée en ce qu'**elle:
- en affichant les multiples des numéros de 1 à 10, permet de compter rythmique en avant/arrière dans leur ensemble par colonne et de manière modulaire par ligne,
- affiche les équations de multiplication des numéros de 1 à 10 et leurs équations de division inverses en notées mathématique universelle de manière modulaire et simultanée par ligne,
- affiche les relations entre les éléments dans les équations de multiplication-division qui sont des opérations inverses,
- comprend 42 numéros de jeu (71) qui sont le produit/dividende dans les équations de multiplication/division et l'indicateur (72) qui affiche la fréquence à laquelle ceux-ci apparaissent dans les équations.

2. Porte-plume jouet selon la revendication 1, lequel affiche les facteurs de 1 à 10 des produits dans les équations de multiplication par ligne au côté de multiplication (1) et les diviseurs de 1 à 10 des dividendes dans les équations de division par ligne au côté de division (21) en forme des équations notées de manière modulaire.

3. Porte-plume jouet selon la revendication 1, lequel affiche la propriété commutative de la multiplication, l'identité multiplicative et les carrés des numéros de 1 à 10 par ligne au côté de multiplication (1) en forme des équations notées de manière modulaire.

4. Porte-plume jouet selon la revendication 1, lequel affiche les relations entre les éléments dans les équations de multiplication-division qui sont des opérations inverses, ainsi que les éléments de valeur égale dans les domaines variables (6 et 27, 7 et 26) de ces équations notées sur chaque ligne, à travers des trous ronds et carrés identiques.

5. Porte-plume jouet selon la revendication 1 ou la revendication 2, lequel comprend un jouet qui permet aux élèves de jouer individuellement ou en groupe à des jeux liés au sujet, de choisir de manière aléatoire le numéro de jeu (71) et d'écrire les équations au porte-plume autant de fois que la fréquence d'équation du numéro de jeu choisi.

6. L'invention comprenant un corps de produit (11) cylindrique droit pourvu d'une poignée de préhension (10), un côté de multiplication du produit (1), un côté de division du produit (21), les domaines fixes (2, 3, 4, 5), les domaines variables (6, 7), les rotateurs du cerceau (13), dix pistons à ressort (37), paliers du cerceau (40) à l'intérieur du corps (11), **caractérisée par** les suivants:
- les cerceaux composés de huit sections formant un arc de 45° (41),
- le côté de multiplication (33) et le côté de division (34) des cerceaux qui sont placés dans les cerceaux et se déplacent de manière symétrique les uns par rapport aux autres à l'intérieur du corps grâce à la rotation des rotateurs du cerceau (13),
- sur la face latérale des cerceaux, dix encoches (38) qui empêchent les cerceaux de tourner dans le corps et sont disposées en face des pistons à ressort (37).

7. L'invention selon la revendication 6, **caractérisée par** les cerceaux (41), deux côtés de multiplication des cerceaux (33), deux côtés de divison des cerceaux (34), les verrouillages à fente de tous les cerceaux (20), les encoches sur la face latérale des cerceaux (38), les faces latérales inutilisées des cerceaux (39a, 39b et 39c).
